# FASCICULE DE BREVET EUROPEEN

(11) **EP 2 042 289 B1**
(45) Date de publication et mention de la délivrance du brevet: **13.10.2010**
(21) Numéro de dépôt: 08165201.8
(22) Date de dépôt: 26.09.2008
(51) Int. Cl.: B29C 45/00

(54) **Système de fermeture pour des capuchons moulés**
Schliesssystem für geformte Kappen
Closing system for moulded caps

(30) Priorité: 26.09.2007 FR 0706738
(43) Date de publication de la demande: 01.04.2009
(73) Titulaire: Moulindustrie, 14350 Sainte Marie Laumont (FR)
(72) Inventeur: Moulin, Jacky, 14350 Sainte Marie Laumont (FR)
(74) Mandataire: Maillet, Alain

(56) Documents cités:
- EP-A- 1 649 998
- WO-A-02/28622
- WO-A-2006/074535
- CA-A1- 2 505 287
- US-A- 4 340 352
- US-A- 5 906 841
- US-A1- 2006 254 023

## Description

La présente invention concerne un système de fermeture pour des capuchons moulés.

Un capuchon du type capuchon pour une bouteille comme du shampoing, de l'après-shampoing, du produit vaisselle ou autres comporte généralement un corps, un opercule et une charnière reliant ledit corps audit opercule. L'ensemble forme un ensemble monobloc. Le corps est destiné à s'emboîter sur la bouteille et l'opercule est destiné à être manoeuvré d'une position de fermeture vers une position d'ouverture et vice-versa autour de la charnière.

Un tel capuchon est moulé en position ouverte et avant son éjection du moule, l'opercule doit être ramené en position de fermeture pour faciliter les manipulations ultérieures.

A cette fin, divers systèmes de fermeture ont été développés pour fermer les capuchons avant leur éjection du moule. Ces systèmes sont compliqués et nécessitent la mise en oeuvre de nombreux actionneurs mécaniques du type moteurs ou vérins qui doivent être synchronisés et manoeuvrés de concert pour obtenir le résultat escompté.

Un système de fermeture de l'art antérieur est divulgué dans CA-A-2505287.

Un objet de la présente invention est de proposer un système de fermeture pour des capuchons moulés qui ne présente pas les inconvénients de l'art antérieur.

A cet effet, est proposé un système de fermeture pour des capuchons moulés formé d'un corps, d'un opercule et d'une charnière, le système de fermeture comprenant :
- deux rails de guidage parallèles,
- pour chaque rail de guidage, un chariot monté mobile en translation sur le rail de guidage entre une butée aval et une butée amont,
- au moins une barre de fermeture disposée entre les deux chariots,
- pour la ou chaque barre de fermeture, deux roues, chacune étant montée sur l'un des chariots, mobile en rotation autour d'un axe de rotation perpendiculaire à la direction de déplacement des chariots et chaque extrémité de ladite barre de fermeture étant montée sur l'une des roues de manière désaxée par rapport audit axe de rotation,
- pour chaque chariot, une crémaillère prévue pour se déplacer parallèlement audit rail de guidage,
- pour chaque roue, un engrenage de manoeuvre mobile en rotation autour dudit axe de rotation, solidaire et coaxial avec ladite roue et prévu pour engrener avec la crémaillère,
- pour chaque chariot, un dispositif de verrouillage prévu pour verrouiller ledit chariot alternativement avec la crémaillère et le rail de guidage,
- pour chaque crémaillère, un dispositif d'activation prévu pour déplacer ladite crémaillère, d'une part, dans un premier sens de manière à amener chaque chariot en butée contre sa butée amont lorsque le dispositif de verrouillage verrouille ledit chariot avec la crémaillère, puis, lorsque le dispositif de verrouillage verrouille ledit chariot avec ledit rail de guidage, de manière à faire subir à chaque engrenage de manoeuvre une rotation qui amène chaque barre de fermeture d'une première position à une deuxième position, mouvement au cours duquel, chaque barre de fermeture entraîne l'opercule de la position ouverte à la position fermée, et, d'autre part, dans un deuxième sens de manière, lorsque le dispositif de verrouillage verrouille ledit chariot avec ledit rail de guidage, à faire subir à chaque engrenage de manoeuvre une rotation qui ramène chaque barre de fermeture de sa deuxième position à sa première position, puis, lorsque le dispositif de verrouillage verrouille ledit chariot avec la crémaillère, de manière à amener chaque chariot en butée contre sa butée aval.

Avantageusement, au moment de la rotation des barres de fermeture, pour chaque barre de fermeture, l'axe de rotation de la barre de fermeture est sensiblement confondu avec l'axe de la charnière des capuchons qui sont fermés par ladite barre de fermeture.

Avantageusement, le dispositif de verrouillage comprend un loquet, une première rainure de verrouillage réalisée sur la crémaillère et une deuxième rainure de verrouillage réalisée sur le rail de guidage, et le loquet est prévu pour s'engager alternativement dans la première rainure de verrouillage ou la deuxième rainure de verrouillage.

Avantageusement, le loquet prend la forme d'un élément oblong et lorsqu'une première extrémité rayonnée coopère avec la première rainure de verrouillage, la deuxième extrémité rayonnée est en appui sur une surface du rail de guidage, et lorsque la deuxième extrémité rayonnée coopère avec la deuxième rainure de verrouillage, la première extrémité rayonnée est en appui sur une surface de la crémaillère.

Avantageusement, chaque dispositif d'activation est un vérin pneumatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de fermeture pour des capuchons moulés selon l'invention ;
les Figs. 2 à 8 représentent les différentes étapes de fonctionnement du système de fermeture selon l'invention, et
la Fig. 9 représente un mode de réalisation des empreintes de moulage d'un capuchon.

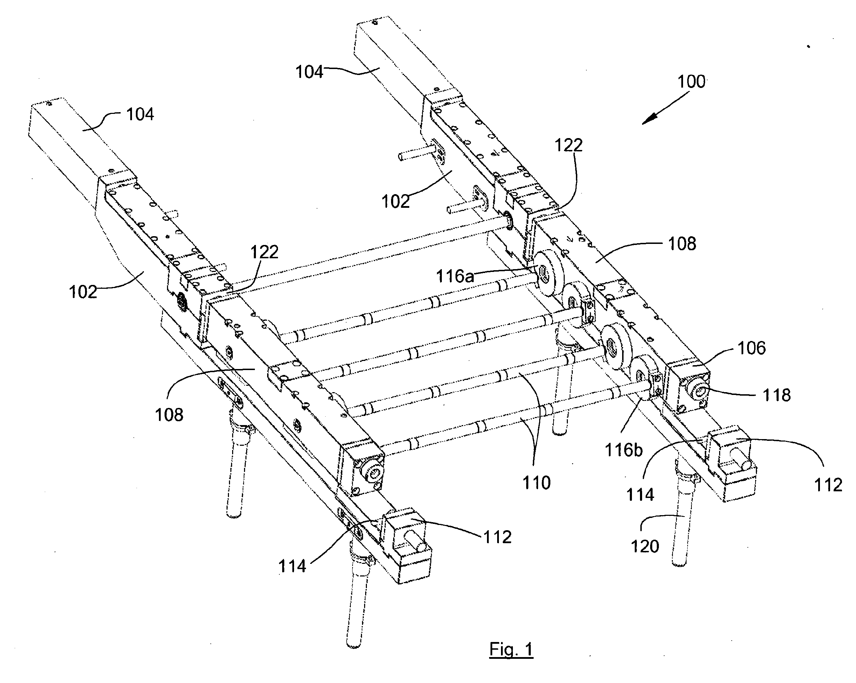

La Fig. 1 représente un système de fermeture 100 pour des capuchons moulés qui est mis en oeuvre en coopération avec une presse à injection. Le système de fermeture comprend une base comprenant deux rails de guidage 102 parallèles. Chaque rail de guidage 102 est monté ici sur deux barres de solidarisation 120 qui permettent de solidariser le système de fermeture 100 avec la presse à injection.

Le système de fermeture 100 comprend, pour chaque rail de guidage 102, un chariot mobile 108. Chaque chariot 108 est mobile en translation longitudinalement le long du rail de guidage 102 considéré entre une butée aval 122 et une butée amont 112. Chaque chariot 108 est guidé en translation sur le rail de guidage 102 considéré par tous dispositifs adéquats et les butées 112 et 122 sont disposées de manière à autoriser le déplacement de chaque chariot 108 sur une distance appropriée comme cela sera mieux compris par la suite.

Les deux chariots 108 sont disposés l'un en face de l'autre et sont reliés entre eux par une ou plusieurs barres de fermeture 110. Chaque barre de fermeture 110 prend la forme d'une barre rectiligne, ici cylindrique, qui s'étend entre les deux chariots 108 perpendiculairement à la direction de déplacement des chariots 108. Le nombre de barres de fermeture 110 varie en fonction du nombre de lignes de capuchons qui sont moulés simultanément par la presse à injection. Ici quatre barres de fermeture 110 sont représentées.

Chaque barre de fermeture 110 est montée mobile en rotation autour d'un axe de rotation parallèle à la direction longitudinale de la barre de fermeture 110 mais qui n'est pas confondu avec l'axe de ladite barre de fermeture 110. En d'autres termes, l'axe de rotation est perpendiculaire à la direction de déplacement des chariots 102.

A cette fin, pour chaque barre de fermeture 110, une roue 116a, 116b est montée mobile en rotation sur chaque chariot 108. L'extrémité de chaque barre de fermeture 110 est fixée sur la périphérie de la roue 116a, 116b considérée, c'est-à-dire de manière désaxée par rapport à l'axe de rotation. Chaque roue 116a, 116b est mobile en rotation autour de son axe qui constitue l'axe de rotation. Chaque barre de fermeture 110 est donc soumise à un mouvement de rotation autour de l'axe des roues 116a, 116b qui le porte. Comme cela est expliqué ci-après, chaque barre de fermeture 110 et donc chaque roue 116a, 116b se déplace entre une première position dans laquelle le capuchon est ouvert et une deuxième position dans laquelle le capuchon est fermé. La roue dans la première position est référencée 116a et la roue dans la deuxième position est référencée 116b.

Comme cela est expliqué ci-après, chaque chariot 108 est mis en mouvement par une crémaillère dont l'extrémité 118 est visible sur la Fig. 1. Chaque crémaillère est mise en mouvement par un dispositif d'activation, qui est décrit ci-après comme un vérin pneumatique 104 fixé sur le rail de guidage 102 considéré, mais qui peut être un vérin hydraulique, électrique ou autre. Chaque crémaillère se déplace parallèlement au rail 102.

Chaque rail de guidage 102 comprend un dispositif de verrouillage 106 dont le fonctionnement est expliqué ci-après et qui coopère avec des rainures de verrouillage. Chaque dispositif de verrouillage 106 est prévu pour verrouiller le chariot 108 alternativement avec la crémaillère 208 et le rail de guidage 102.

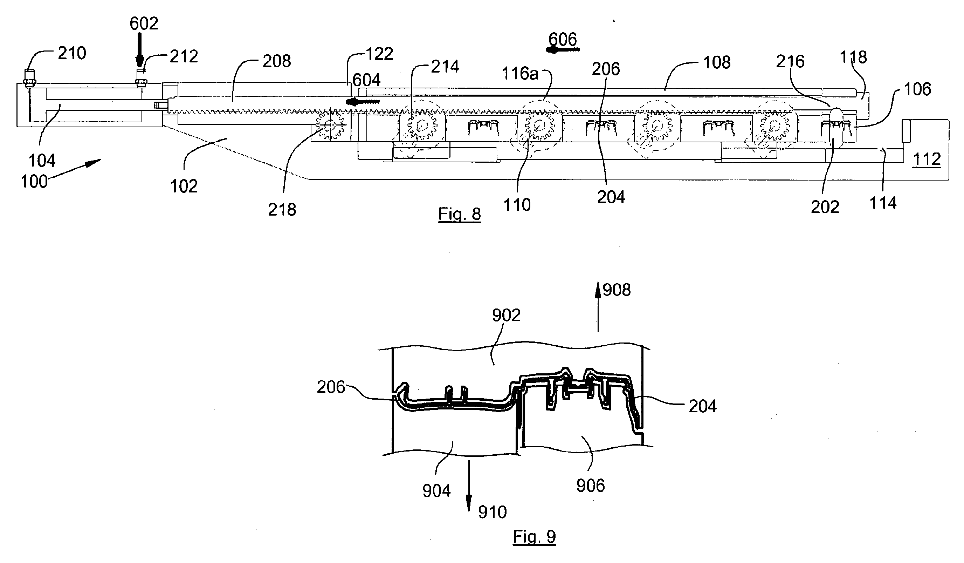

La Fig. 9 représente un mode de réalisation des empreintes de moulage d'un capuchon. Le corps 204 est moulé à partir d'une première empreinte 902 qui vient mouler la partie supérieure du corps 204 et une deuxième empreinte 906 qui vient mouler la partie inférieure du corps 204, c'est-à-dire la partie qui est destinée à s'emboîter ultérieurement sur la bouteille. L'opercule 206 est réalisé à partir de la première empreinte 902 qui vient conformer la partie intérieure de l'opercule 206, c'est-à-dire la partie qui vient se fermer sur le corps 204 et une troisième empreinte 904 qui vient conformer la partie extérieure de l'opercule 206.

Après le moulage des capuchons, d'une part, la première empreinte 902 est déplacée dans le sens de la flèche 908 de manière à dégager l'espace dans lequel l'opercule 206 va pivoter, et, d'autre part, la troisième empreinte 904 est déplacée dans le sens de la flèche 910 de manière à dégager l'espace dans lequel la barre de fermeture 110 va se déplacer. Les capuchons ne sont donc plus maintenus que par le corps 204 qui est en prise avec la deuxième empreinte 906.

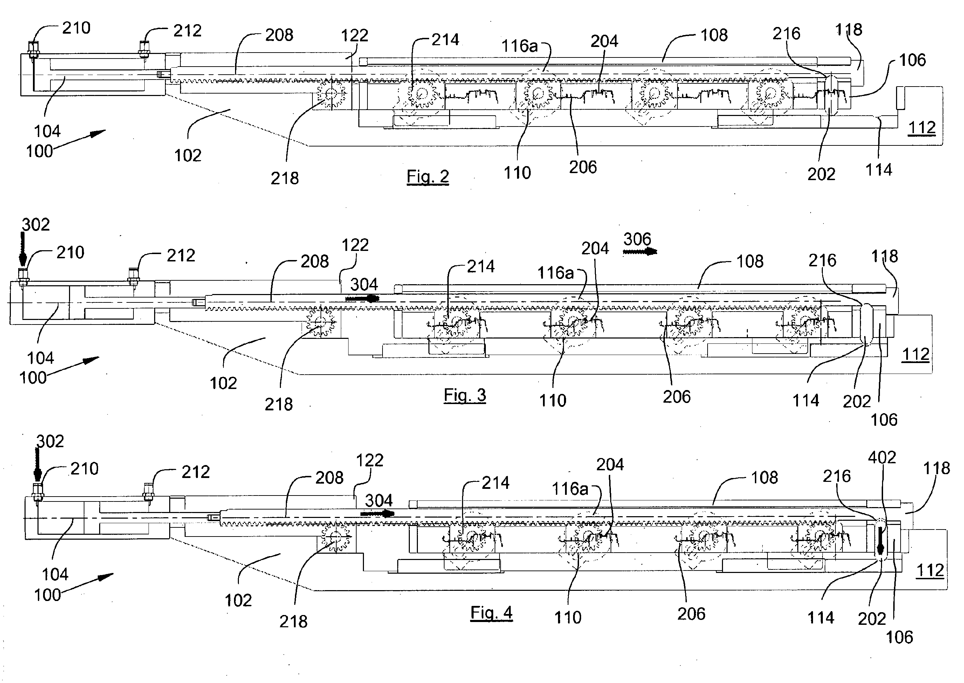

Les Figs. 2 à 8 présentent les étapes successives de fonctionnement du système de fermeture 100.

La Fig. 2 représente le système de fermeture 100 après le moulage des capuchons qui présentent un corps 204, une charnière et un opercule 206 en position ouverte et après dégagement de la première empreinte 902 et de la troisième empreinte 904.

Le vérin pneumatique 104 présente une première admission 210 et une deuxième admission 212. Chaque admission 210, 212 est prévue pour être connectée à une source d'air sous pression afin d'activer le vérin pneumatique 104. L'utilisation d'air et non d'huile évite, en cas de fuite, la pollution du poste de travail par de l'huile.

Le vérin pneumatique 104 coopère avec la crémaillère 208. L'admission d'air dans la première admission 210 entraîne le déplacement de la crémaillère dans un premier sens et l'admission d'air dans la deuxième admission 212 entraîne le déplacement de la crémaillère dans un deuxième sens.

Un engrenage de guidage 218 est monté sur le rail de guidage 102 et engrène avec les dents de la crémaillère 208.

Chaque roue 116a est solidaire d'un engrenage de manoeuvre 214 mobile en rotation autour de l'axe de rotation et coaxial avec ladite roue 116a. Chaque engrenage de manoeuvre 214 engrène avec les dents de la crémaillère 208.

Le dispositif de verrouillage 106 comprend un loquet 202, une première rainure de verrouillage 216 réalisée sur la crémaillère 208 et une deuxième rainure de verrouillage 114. Le loquet 202 s'engage alternativement dans la première rainure de verrouillage 216 et dans la deuxième rainure de verrouillage 114, de manière à verrouiller le chariot 108 alternativement avec la crémaillère 208 et le rail de guidage 102. Au cours de l'étape de la Fig. 2, le loquet 202 est verrouillé avec la première rainure de verrouillage 216 rendant solidaire la crémaillère 208 et le chariot 108. Le loquet 202 prend la forme d'un élément oblong dont chaque extrémité rayonnée coopère avec l'une des rainures de verrouillage 114, 216. Lorsque une première extrémité rayonnée coopère avec la première rainure de verrouillage 216, la deuxième extrémité rayonnée glisse sur une surface du rail de guidage 102. Lorsque la deuxième extrémité rayonnée coopère avec la deuxième rainure de verrouillage 114, la première extrémité rayonnée glisse sur une surface de la crémaillère 208.

Au cours de l'étape représentée sur la Fig. 3, l'air est admis (flèche 302) dans la première admission 210 du vérin pneumatique 104 qui repousse ainsi la crémaillère 208 (flèche 304). Comme le loquet 202 est verrouillé avec la première rainure de verrouillage 216 par appui de la deuxième extrémité rayonnée sur la surface du rail de guidage 102, le chariot 108 se déplace en translation sur le rail de guidage 102 (flèche 306) et vient en butée contre la butée amont 112. Chaque barre de fermeture 110 est dans une première position, c'est-à-dire sous l'opercule 206.

Au cours de l'étape représentée sur la Fig. 4, l'air est admis (flèche 302) dans la première admission 210 du vérin pneumatique 104 qui continue ainsi à repousser la crémaillère 208 (flèche 304). Le loquet 202 se déverrouille de la première rainure de verrouillage 216 et se verrouille avec la deuxième rainure de verrouillage 114 (flèche 402) par appui de la première extrémité rayonnée sur la surface de la crémaillère 208.

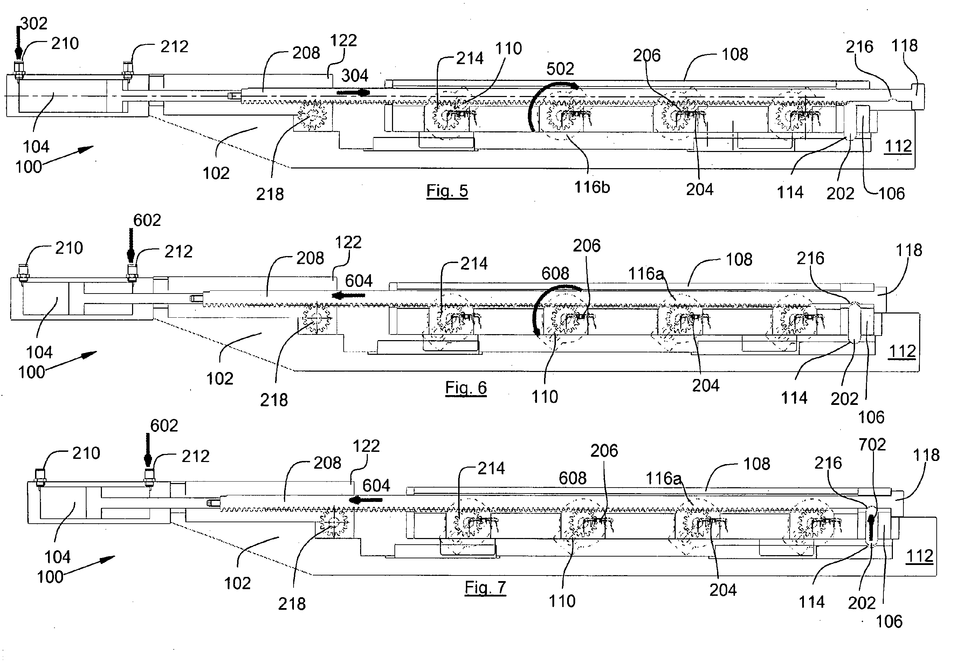

Au cours de l'étape représentée sur la Fig. 5, l'air est admis (flèche 302) dans la première admission 210 du vérin pneumatique 104 qui continue ainsi à repousser la crémaillère 208 (flèche 304).

Comme le loquet 202 est déverrouillé d'avec la première rainure de verrouillage 216, la crémaillère 208 continue à avancer. Comme le loquet 202 est verrouillé avec la deuxième rainure de verrouillage 114, le chariot 108 reste immobile. La poursuite du mouvement de la crémaillère 208 entraîne la rotation des engrenages de manoeuvre 214 et donc la rotation des roues 116b (flèche 502) qui atteignent alors la deuxième position et entraînent la rotation des barres de fermeture 110 qui passent également dans une deuxième position. Lors de sa rotation, chaque barre de fermeture 110 vient en contact avec l'opercule 206 et l'entraîne en rotation autour de la charnière pour venir le fermer et l'enclencher sur le corps 204.

La position de la butée amont 112 est donc étudiée de manière à ce que, au moment de la rotation des barres de fermeture 110, l'axe de rotation de chaque barre de fermeture 110 est sensiblement confondu avec l'axe de la charnière des capuchons qu'elle doit fermer.

Au cours de l'étape représentée sur la Fig. 6, l'air est admis (flèche 602) dans la deuxième admission 212 du vérin pneumatique 104 qui attire ainsi la crémaillère 208 (flèche 604). Comme le loquet 202 est verrouillé avec la deuxième rainure de verrouillage 114, le chariot 108 reste immobile et la crémaillère 208 se déplace sans déplacer le chariot 108.

Le mouvement de la crémaillère 208 entraîne la rotation des engrenages de manoeuvre 214 et donc la rotation des roues 116a (flèche 608) qui reviennent alors dans la première position et entraînent la rotation des barres de fermeture 110.

Au cours de l'étape représentée sur la Fig. 7, l'air est admis (flèche 602) dans la deuxième admission 212 du vérin pneumatique 104 qui continue ainsi à attirer la crémaillère 208 (flèche 604). Le loquet 202 se déverrouille de la deuxième rainure de verrouillage 114 et se verrouille avec la première rainure de verrouillage 216 (flèche 702).

Au cours de l'étape représentée sur la Fig. 8, l'air est admis (flèche 602) dans la deuxième admission 212 du vérin pneumatique 104 qui continue ainsi à attirer la crémaillère 208 (flèche 604). Comme le loquet 202 est verrouillé avec la première rainure de verrouillage 216, le chariot 108 se déplace en translation sur le rail de guidage 102 (flèche 606) et vient en butée contre la butée aval 122.

Les capuchons ainsi fermés peuvent être éjectés et un nouveau cycle d'injection/moulage, de fermeture des capuchons et d'éjection peut avoir lieu.

La réalisation du système de fermeture 100 est particulièrement simple et son fonctionnement est facile à gérer car il y a, par rail de guidage 102, un seul élément à commander, il s'agit du vérin pneumatique 104.

Ainsi, pour chaque crémaillère 208, le dispositif d'activation 104 déplace la crémaillère 208, d'une part, dans le premier sens 304 de manière à amener chaque chariot 108 en butée contre sa butée amont 112 lorsque le dispositif de verrouillage 106 verrouille le chariot 108 avec la crémaillère 208, puis, lorsque le dispositif de verrouillage 106 verrouille le chariot 108 avec le rail de guidage 102, de manière à faire subir à chaque engrenage de manoeuvre 214 une rotation qui amène chaque barre de fermeture 110 de la première position à la deuxième position, mouvement au cours duquel, chaque barre de fermeture 110 entraîne l'opercule 206 de la position ouverte à la position fermée, et, d'autre part, dans le deuxième sens 604 de manière, lorsque le dispositif de verrouillage 106 verrouille le chariot 108 avec le rail de guidage 102, à faire subir à chaque engrenage de manoeuvre 214 une rotation qui ramène chaque barre de fermeture 110 de sa deuxième position à sa première position, puis, lorsque le dispositif de verrouillage 106 verrouille le chariot 108 avec la crémaillère 208, de manière à amener chaque chariot 108 en butée contre sa butée aval 122.

Après le moulage des capuchons 204, 206 et le dégagement de la première empreinte 902 et de la troisième empreinte 904, le procédé de fermeture des capuchons 204, 206 comprend:
- une étape de déplacement en translation des chariots 108 et des barres de fermeture 110 qui y sont liées et qui sont dans une première position angulaire correspondant à la première position des roues 116a,
- une étape d'arrêt du déplacement lorsque les barres de fermeture 110 sont correctement positionnées par rapport aux opercules 206 qu'elles doivent fermer, c'est-à-dire sensiblement au-dessous des opercules 206, cette position correspondant à la mise en butée des chariots 108 contre les butées amont 112,
- une étape de mise en rotation des barres de fermeture 110 qui passe dans une deuxième position angulaire correspondant à la deuxième position des roues 116b,
- une étape d'arrêt de la rotation lorsque les barres de fermeture 110 ont suffisamment tourné pour fermer les opercules 206,
- une étape de mise en rotation selon un sens de rotation inverse,
- une étape d'arrêt de la rotation en sens inverse lorsque les barres de fermeture 110 sont revenues dans la première position angulaire,
- une étape de déplacement en translation des chariots 108 et des barres de fermeture 110 dans une direction opposée à la première étape de déplacement, et
- une étape d'arrêt du déplacement lorsque les chariots 108 sont en butée contre les butées aval 122.

Le capuchon ainsi fermé peut alors être éjecté de la deuxième empreinte 906.

Bien entendu, la présente invention n'est pas limitée aux exemples et modes de réalisation décrits et représentés, mais elle est susceptible de nombreuses variantes accessibles à l'homme de l'art, telles que définies dans les revendications.

## Revendications

1. Système de fermeture (100) pour des capuchons moulés formé d'un corps (204), d'un opercule (206) et d'une charnière, le système de fermeture (100) comprenant :
- deux rails de guidage (102) parallèles,
- pour chaque rail de guidage (102), un chariot (108) monté mobile en translation sur le rail de guidage (102) entre une butée aval (122) et une butée amont (112),
- au moins une barre de fermeture (110) disposée entre les deux chariots (108),
- pour la ou chaque barre de fermeture (110), deux roues (116a, 116b), chacune étant montée sur l'un des chariots (108), mobile en rotation autour d'un axe de rotation perpendiculaire à la direction de déplacement des chariots (102) et chaque extrémité de ladite barre de fermeture (110) étant montée sur l'une des roues (116a, 116b) de manière désaxée par rapport audit axe de rotation,
- pour chaque chariot (108), une crémaillère (208) prévue pour se déplacer parallèlement audit rail de guidage (102),
- pour chaque roue (116a, 116b), un engrenage de manoeuvre (214) mobile en rotation autour dudit axe de rotation, solidaire et coaxial avec ladite roue (116a, 116b) et prévu pour engrener avec la crémaillère (208),
- pour chaque chariot (108), un dispositif de verrouillage (106) prévu pour verrouiller ledit chariot (108) alternativement avec la crémaillère (208) et le rail de guidage (102),
- pour chaque crémaillère (208), un dispositif d'activation (104) prévu pour déplacer ladite crémaillère (208), d'une part, dans un premier sens (304) de manière à amener chaque chariot (108) en butée contre sa butée amont (112) lorsque le dispositif de verrouillage (106) verrouille ledit chariot (108) avec la crémaillère (208), puis, lorsque le dispositif de verrouillage (106) verrouille ledit chariot (108) avec ledit rail de guidage (102), de manière à faire subir à chaque engrenage de manoeuvre (214) une rotation qui amène chaque barre de fermeture (110) d'une première position à une deuxième position, mouvement au cours duquel, chaque barre de fermeture (110) entraîne l'opercule (206) de la position ouverte à la position fermée, et, d'autre part, dans un deuxième sens (604) de manière, lorsque le dispositif de verrouillage (106) verrouille ledit chariot (108) avec ledit rail de guidage (102), à faire subir à chaque engrenage de manoeuvre (214) une rotation qui ramène chaque barre de fermeture (110) de sa deuxième position à sa première position, puis, lorsque le dispositif de verrouillage (106) verrouille ledit chariot (108) avec la crémaillère (208), de manière à amener chaque chariot (108) en butée contre sa butée aval (122).

2. Système de fermeture (100) selon la revendication 1, **caractérisé en ce que**, au moment de la rotation des barres de fermeture (110), pour chaque barre de fermeture (110), l'axe de rotation de la barre de fermeture (110) est sensiblement confondu avec l'axe de la charnière des capuchons (204, 206) qui sont fermés par ladite barre de fermeture (110).

3. Système de fermeture (100) selon l'une des revendications 1 ou 2, **caractérisé en ce que** le dispositif de verrouillage (106) comprend un loquet (202), une première rainure de verrouillage (216) réalisée sur la crémaillère (208) et une deuxième rainure de verrouillage (114) réalisée sur le rail de guidage (102), et **en ce que** le loquet (202) est prévu pour s'engager alternativement dans la première rainure de verrouillage (216) ou la deuxième rainure de verrouillage (114).

4. Système de fermeture (100) selon la revendication 3, **caractérisé en ce que** le loquet (202) prend la forme d'un élément oblong et **en ce que** lorsque une première extrémité rayonnée coopère avec la première rainure de verrouillage (216), la deuxième extrémité rayonnée est en appui sur une surface du rail de guidage (102), et **en ce que** lorsque la deuxième extrémité rayonnée coopère avec la deuxième rainure de verrouillage (114), la première extrémité rayonnée est en appui sur une surface de la crémaillère (208).

5. Système de fermeture (100) selon l'une des revendications 1 à 3, **caractérisé en ce que** chaque dispositif d'activation (104) est un vérin pneumatique.

## Claims

1. Closing system (100) for moulded caps, formed by a body (204), a cover (206) and a hinge, the closing system (100) comprising:
- two parallel guide rails (102),
- for each guide rail (102), a carriage (108) mounted to be movable in translation along the guide rail (102) between a downstream stop (122) and an upstream stop (112),
- at least one closing bar (110) located between the two carriages (108),
- for the or each closing bar (110), two wheels (118a, 116b), each being mounted on one of the carriages (108), rotationally movable about a rotation axis perpendicular to the direction of movement of the carriages (102) and each end of said closing bar (110) being mounted on one of the wheels (116a, 116b) offset in relation to said rotation axis,
- for each carriage (108), a rack (208) provided to move parallel to said guide rail (102),
- for each wheel (116a, 116b), a manoeuvring gear (214) rotationally movable about said rotation axis, integrally fixed to and coaxial with said wheel (116a, 116b), and designed to engage with the rack (208),
- for each carriage (108), a locking device (106) provided for locking the said carriage (108) alternately with the rack (208) and the guide rail (102),
- for each rack (208), an activating device (104) provided for displacing the said rack (208), on the one hand, in a first direction (304), so as to move said carriage (108) into abutment on its upstream stop (112) when the locking device (106) locks the said carriage (108) to the rack (208), then, when the locking device (106) locks the said carriage (108) to the said guide rail (102), so as to subject each manoeuvring gear (214) to a rotation which moves each closing bar (110) from a first position to a second position, in the course of which movement each closing bar (110) drives the cover (206) from the open position to the closed position and, on the other hand, in a second direction (604), so that, when the locking device (106) locks the said carriage (108) to the said guide rail (102), each manoeuvring gear (214) is subjected to a rotation which moves each closing bar (110) from its second position to its first position, then, when the locking device (106) locks the said carriage (108) to the rack (208), so as to move each carriage (108) into abutment on its downstream stop (122).

2. Closing system (100) according to claim 1, **characterised in that** during the rotation of the closing bars (110), for each closing bar (110), the axis of rotation of the closing bar (110) substantially coincides with the axis of the hinge of the caps (204, 206) which are closed by said closing bar (110).

3. Closing system (100) according to one of claims 1 or 2, **characterised in that** the locking device (106) comprises a latch (202), a first locking groove (216) provided on the rack (208) and a second locking groove (114) provided on the guide rail (102), and **in that** the latch (202) is provided so as to engage alternately in the first locking groove (216) or In the second locking groove (114).

4. Closing system (100) according to claim 3, **characterised in that** the latch (202) takes the form of an elongate element and **in that**, when a first radiating end cooperates with the first locking groove (216), the second radiating end bears on a surface of the guide rail (102), and **In that** when the second radiating end cooperates with the second locking groove (114), the first radiating end bears on a surface of the rack (208).

5. Closing system (100) according to one of claims 1 to 3, **characterised in that** each activating device (104) is a pneumatic jack.

## Patentansprüche

1. Verschlusssystem (100) für gegossene Verschlusskappen, geformt aus einem Körper (204), einem Deckel (206) und einem Scharnier, wobei das Verschlusssystem (100) aufweist:
- zwei parallele Führungsschienen (102),
- einen Schlitten (108) je Führungsschiene (102), der in Längsrichtung beweglich auf der Führungsschiene (102) zwischen einem hinteren Anschlag (122) und einem vorderen Anschlag (112) gelagert ist,
- mindestens eine Verschlussstange (110), die zwischen den zwei Schlitten (108) angeordnet ist,
- zwei Räder (116a, 116b) je Verschlusstange (110), wobei jedes drehbeweglich um eine Rotationsachse an einem der Schlitten (108) montiert ist, die senkrecht zur Bewegungsrichtung der Schlitten (108) ist, und wobei jedes Ende der Verschlusstange (110) an eines der Räder (116a, 116b) zur Rotationsachse versetzt montiert ist,
- eine Zahnstange (208) je Schlitten (108), die parallel zur Führungsschiene (102) zu bewegbar ist,
- ein Antriebszahnrad (214) je Rad (116a, 116b), das um die Rotationsachse drehbeweglich ist, sowie koaxial mit besagtem Rad (116a, 116b) verbunden ist, und mit der Zahnstange (208) in Eingriff steht,
- eine Verriegelungsvorrichtung (106) je Schlitten (108), die den Schlitten (108) alternativ mit der Zahnstange (208) oder mit der Führungsschiene (102) verriegelt,
- eine Aktivierungsvorrichtung (104) je Zahnstange (208), die zur Bewegung der Zahnstange (208) vorgesehen ist,
und zwar zum Einem in einer ersten Richtung (304),
- sodass jeder Schlitten (108) gegen seinen vorderen Anschlag (112) zum Anschlag geführt wird, wenn die Verriegelungsvorrichtung (106) den Schlitten (108) mit der Zahnstange (208) verriegelt,
- und sodass daraufhin, wenn die Verriegelungsvorrichtung (106) den Schlitten (108) mit der Führungsschiene (102) verriegelt, jedes Antriebszahnrad (214) mit einer Drehung beaufschlagt wird, die jede Verschlusstange (110) aus einer ersten Position in eine zweite Position führt, wobei im Verlauf dieser Bewegung jede Verschlusstange (110) den Deckel (206) aus einer geöffneten Position in eine geschlossene Position bringt,
und zum anderen in einer zweiten Richtung,
- sodass, wenn die Verriegelungsvorrichtung (106) den Schlitten (108) mit der Führungsschiene (102) verriegelt, jedes Antriebszahnrad (214) mit einer Drehung beaufschlagt wird, die jede Verschlusstange (110) von ihrer zweiten Position in ihre erste Position zurückführt,
- und sodass daraufhin, wenn die Verriegelungsvorrichtung (106) den Schlitten (108) mit der Zahnstange (208) verriegelt, jeder Schlitten (108) auf Anschlag gegen seinen hinteren Anschlag (122) geführt wird.

2. Verschlusssystem (100) gemäß Anspruch 1, **dadurch gekennzeichnet, dass**
im Moment der Rotation einer jeden Verschlusstange (110) die Rotationsachse der Verschlusstange (110) im Wesentlichen mit der Achse des Scharniers der Verschlusskappen (204, 206) übereinstimmt, die durch die Verschlusstange (110) geschlossen werden.

3. Verschlusssystem (100) gemäß einem der Ansprüche 1 oder 2, **dadurch gekennzeichnet, dass**
die Verriegelungsvorrichtung (106) einen Riegel (202) aufweist, eine erste Verriegelungsnut (216), die an der Zahnstange (208) ausgebildet ist, und eine zweite Verriegelungsnut, die an der Führungsschiene (102) ausgebildet ist, und **dadurch**,
dass der Riegel (202) dafür vorgesehen ist, entweder in die erste Verriegelungsnut (216) oder in die zweite Verriegelungsnut (114) einzurasten.

4. Verschlusssystem (100) gemäß Anspruch 3, **dadurch gekennzeichnet, dass** der Riegel (202) die Form eines länglichen Elements aufweist und dass, wenn ein erstes Ende mit der ersten Verriegelungsnut (216) zusammenwirkt, das zweite Ende an einer Oberfläche der Führungsschiene (102) anliegt, und
dass, wenn das zweite Ende mit der zweiten Verriegelungsnut (114) zusammenwirkt, das erste Ende an einer Oberfläche der Zahnstange (208) anliegt.

5. Verschlusssystem (100) gemäß einem der Ansprüche 1 bis 3, **dadurch gekennzeichnet, dass**
jede Aktivierungsvorrichtung (104) ein pneumatischer Zylinder ist.
